Europäisches Patentamt

European Patent Office

Office européen des brevets

(19)

(11) **EP 0 598 995 B1**

(12) **EUROPEAN PATENT SPECIFICATION**

(45) Date of publication and mention
of the grant of the patent:
**29.10.1997 Bulletin 1997/44**

(51) Int Cl.$^6$: **H04N 1/41**

(21) Application number: **93113923.2**

(22) Date of filing: **31.08.1993**

(54) **Image encoding/decoding method**

Verfahren zur Kodierung/Dekodierung von Bildern

Procédé de codage/décodage d'images

(84) Designated Contracting States:
**DE FR GB**

(30) Priority: **26.11.1992 JP 316759/92**

(43) Date of publication of application:
**01.06.1994 Bulletin 1994/22**

(60) Divisional application: **96107420.0**

(73) Proprietor: **MITSUBISHI DENKI KABUSHIKI KAISHA**
**Tokyo (JP)**

(72) Inventor: **Oka, Kenichiro,**
**c/o Mitsubishi Denki K.K.**
**Fukuyama-shi, Hiroshima (JP)**

(74) Representative: **KUHNEN, WACKER & PARTNER**
**Alois-Steinecker-Strasse 22**
**85354 Freising (DE)**

(56) References cited:
**EP-A- 0 261 561          EP-A- 0 549 309**

- **PATENT ABSTRACTS OF JAPAN vol. 13, no. 481 (E-838) 31 October 1989 & JP-A-1 188 166 (NIPPON TELEGR & TELEPH CORP NTT 27 July 1989**

**Description**

BACKGROUND OF THE INVENTION

The present invention relates to an image encoding method which is suitable for processing an image having multitone gradations.

As a conventional block truncation encoding method which divides image data into a plurality of blocks each consisting of a plurality of pixels and approximates the image data by a small number of representative gradations in each of the blocks, for example, there is known a method which is disclosed in Unexamined Japanese Patent Publication (Kokai) JP-A-1 188 166.

The procedures of the conventional encoding method are as follows:

(1) An image is divided into a plurality of blocks each consisting of a plurality of pixels.

(2) In each block, there is found a difference D between the maximum value of gradation levels Lmax and the minimum value thereof Lmin, that is, D=Lmax-Lmin, and the resultant differences D are classified into the following three kinds of encoding modes:

Mode A:    when D is small;
           Pixels in the block are quantized to 1 level.
Mode B:    when D is comparatively large;
           Pixels in the block are quantized to 2 level.
Mode C:    when D is large;
           pixels in the block are quantized to 4 level.

(3) When the quantized level is 1 level, then an average value is used; when 2 level, then the respective representative values of a pixel group larger than the average value and a pixel group smaller than the average value are used; and, when 4 level, then 4 values at regular distances and corresponding to gradation distributions in the block are used.

(4) Each of the blocks is designated by a reference level La for regulating the quantization level in the block, a level distance Ld, and a level specifying signal (2 bits/pixel) for regulating a quantization level for every pixel.

(5) The level specifying signal is connected between the blocks to be converted into two bit plane images ($\phi 1$, $\phi 2$), and are then encoded by use of binary image codes such as MMR (CCITT/T. 6) or the like, respectively. Also, the level distance Ld is encoded by use of a variable length code, and the reference level La encodes a difference between the blocks by use of a variable length code.

Also, according to the conventional encoding method, there are employed the following several means in order to enhance an encoding efficiency:

(1) The encoding modes are classified into 3 kinds according to the differences between the maximum and minimum values of the gradation level of the pixels in each of the blocks to change the quantizing level number.

(2) The level specifying signal is converted into the two bit plane images and the two bit plane images are respectively encoded in terms of codes for binary images.

(3) The level distance Ld is encoded in terms of a variable length code.

(4) The reference level La encodes a difference between the blocks by use of a variable length code.

In the variable length codes encoded in a block unit in this manner, the code data length thereof varies in the respective blocks. Therefore, it is difficult to take out an arbitrary block from the code data group for the purpose of image editing. Further, due to the fact that the reference level La is encoded by a difference between the blocks in a variable length code, even if only the codes in an arbitrary block are taken out, they cannot be decoded but the codes must be decoded sequentially from the first block in the same order as they are encoded.

As an encoding method to solve the above problems, there is known an encoding method of a GBTC (Generalized Block Truncation Coding) type which is disclosed in the draft of a meeting for reading papers of the Institute of Image Electronics Engineers of Japan, "evaluation of an image compression method in a hard copy device" by Kenichiro Oka and Masuru Onishi, April 1, 1991, the content of which being substantially equal to that of "Implementation of image compression for printers" by Kenichiro Oka and Masuru Onishi (preprinted from "Color Hard Copy and Graphics Arts", Proceedings Preprint, SPIE - The International Society for Optical Engineering, 11-14 February 1992, San Jose, California). Description will be given below of this encoding method.

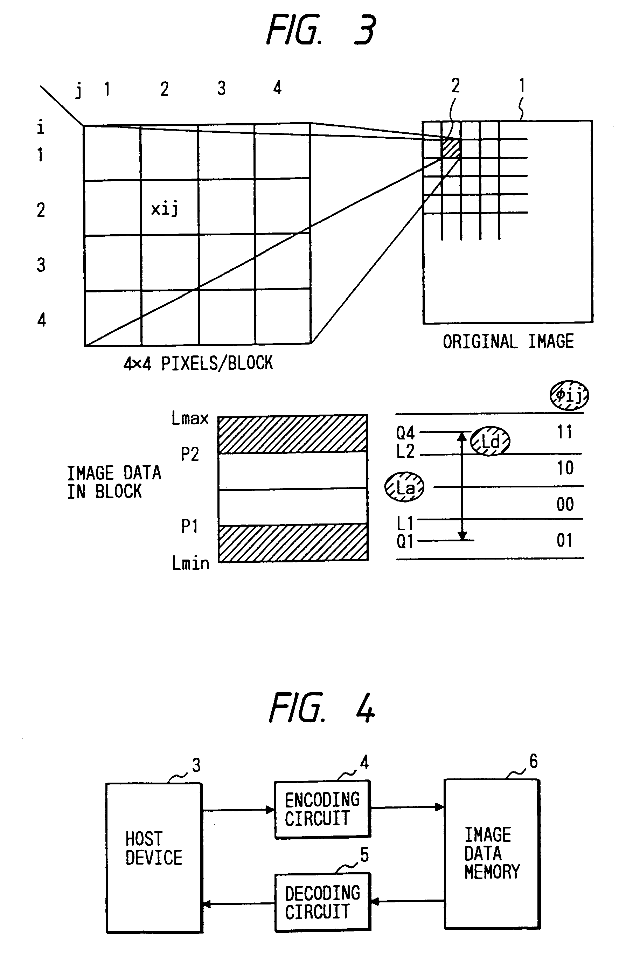

In Fig. 3, there is shown an explanatory view of the above encoding method of a GBTC type. In Fig. 3, reference character 1 designates an original image; 2, a block which is composed of a square consisting of 4x4 pixels; Xij (i, j = 1, 2, 3, 4), a piece of pixel data (which will be hereinafter called "Xij"); and $\phi$ij (i, j = 1, 2, 3, 4), a level specification signal (which will be hereinafter referred to as "$\phi$ij").

In Tables 1 and 2, there are shown an algorithm of a conventional GBTC type encoding/decoding method in which encoded data respectively have a fixed length.

[TABLE 1]

```
                    GBTC type encoding algorithm
    P1 = (Lmax + 3Lmin)/4
    P2 = (3Lmax + Lmin)/4
    Q1 = mean value of all Xij (Xij ≤ P1)
    Q4 = mean value of all Xij (Xij > P2)
    La = (Q1 + Q4)/2
    Ld = Q4 - Q1
    L1 = La - Ld/4
    L2 = La + Ld/4
    for (i = 1, 2, 3, 4)
       for (i = 1, 2, 3, 4)
          if Xij ≤ L1          φij = 01 (binary)
          else if Xij ≤ La     φij = 00 (binary)
          else if Xij ≤ L2     φij = 10 (binary)
          else                 φij = 11 (binary)
          end if
       end for
    end for
```

[TABLE 2]

```
                    GBTC type decoding algorithm
    for (i = 1, 2, 3, 4)
       for (i = 1, 2, 3, 4)
          if φij = 01          Yij = La - Ld/2
          else if φij = 00     Yij = La - Ld/6
          else if φij = 10     Yij = La + Ld/6
          else                 Yij = La + Ld/2
          end if
       end for
    end for
```

Fig. 4 is a block circuit diagram of a signal process system using the above encoding/decoding method, in which reference numeral 3 designates a host device; 4, an encoding circuit; 5, a decoding circuit 5; and 6, an image data memory (which will be hereinafter called a memory).

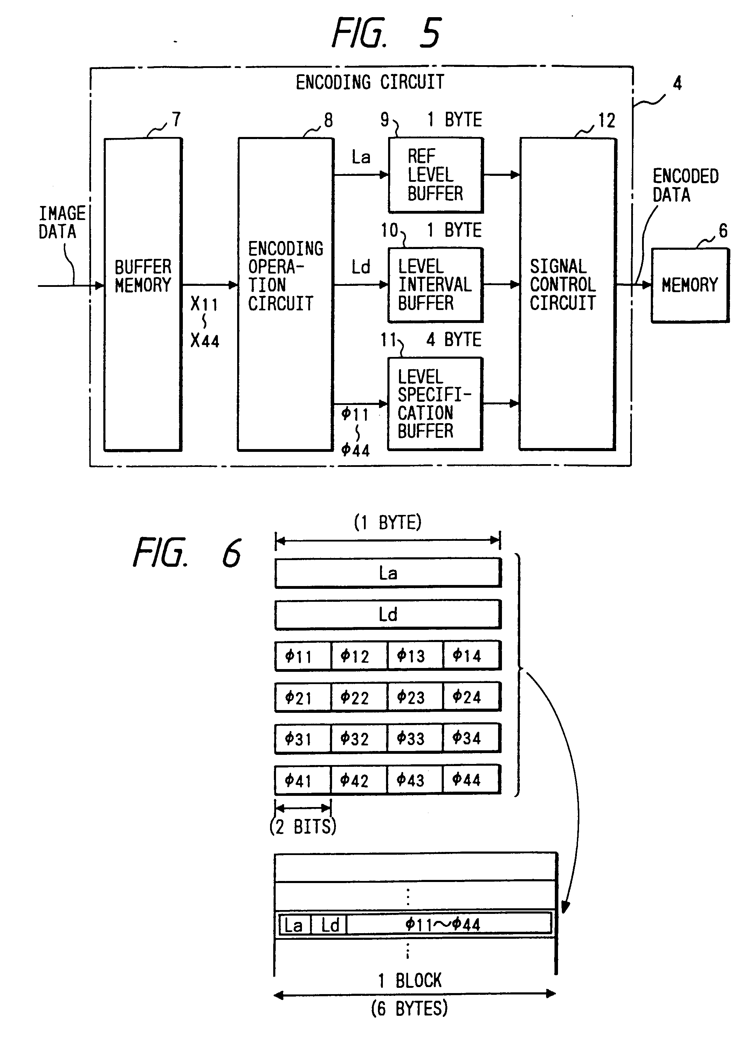

Also, Fig. 5 is a block circuit diagram of the encoding circuit 4, in which reference numeral 7 designates a buffer memory; 8, an encoding operation circuit; 9, a reference level buffer; 10, a level interval buffer; 11, a level specification signal buffer; and 12, a signal control circuit.

Next, description of the encoding method will be given below. In the conventional encoding method, it is assumed that the pixel data Xij is composed of 1 byte. The original image 1 is divided into blocks 2 each consisting of 4×4 pixels, and each of the blocks is then encoded. That is, at first, it is divided between the maximum value Lmax and minimum value Lmin pixels in each block 2 into four equal parts, in which at quarter value from the bottom is expressed as P1 while a quarter value from the top is expressed as P2. Next, the average value of pixels values ranging from Lmin up to P1 is expressed as Q1, while the mean value of pixel values ranging from Lmax down to P2 is expressed as Q4.

Then, the reference level La of the block is found according to the following equation:

$$La = (Q1 + Q4)/2$$

And, the level interval Ld is found according to the following equation:

$$Ld = Q4 - Q1$$

After then, the level interval Ld is divided into four equal parts, in which a quarter value from the bottom is expressed as L1 while a quarter value from the top is expressed as L2. Next, with L1, La and L2 as the threshold values thereof, 16 pixels within the block are respectively quantized in the following manner:

When $Lmin \leq xij \leq L1$,      $\phi ij = 01$ (binary value);
When $L1 < xij \leq La$,      $\phi ij = 00$ (binary value);
When $La < xij \leq L2$,      $\phi ij = 10$ (binary value);
When $L2 < xij \leq Lmax$,      $\phi ij = 11$ (binary value).

Now, description will be given below of the operation of the encoding circuit 4 with reference to Figs. 5 and 6. In Fig. 5, the image data corresponding to 4 lines is once stored in the buffer memory 7 and are then transmitted to the encoding operation circuit 8 by blocks, in which La, Ld, and $\phi 11$ to $\phi 44$ are found according to such a procedure as described above. The thus found La, Ld and $\phi 11$ to $\phi 44$ are then sent respectively through the reference level buffer 9, level interval buffer 10 and level specification signal buffer 11 to the signal control circuit 12, in which they are collected as code data by blocks as shown in Fig. 6.

The code data is written in the memory 6 in the form of a code system arranged in such a manner as shown in Fig. 6. If 1 byte is allocated to La, 1 byte is allocated to Ld, and 2 bits are allocated to each of $\phi 11$ to $\phi 44$, then the length of the encoded data belonging to 1 block is 6 bytes. In this manner, the code length of each block is a fixed length of 6 bytes, so that it is simple to take out the code data of an arbitrary block from the code system.

Fig. 7 is a block diagram of the decoding circuit 5 shown in Fig. 4, in which reference numeral 14 stands for a signal distribution circuit; 15, a reference level buffer; 16, a level interval buffer; 17, a level specification signal buffer; 18, a decoding operation circuit; and 19, a buffer memory, respectively.

Fig. 8 is an explanatory view of a conventional GBTC type decoding method shown in Table 2, in which reference character yij (i, j = 1, 2, 3, 4) stands for decoded pixel data.

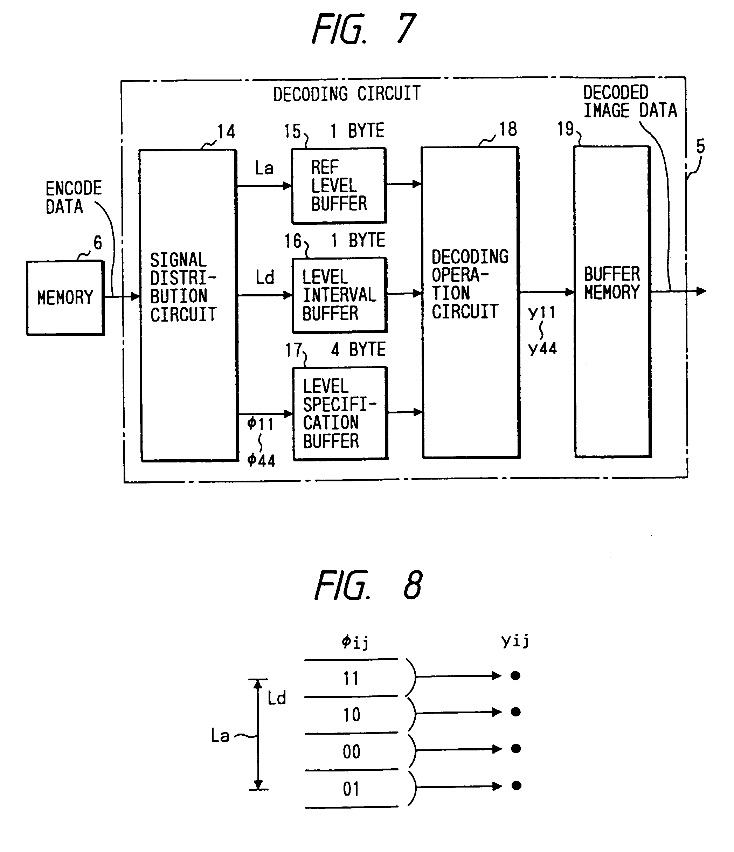

Next, the conventional decoding method will be described below. In this method, as shown in Fig. 8, a piece of encoded data is composed of La, Ld, and $\phi ij$. On the basis of these parameters, the following operation is performed to thereby find the decoded pixel data yij.

When $\phi ij = 01$, then $yij = La - Ld/2$
When $\phi ij = 00$, then $yij = La - Ld/6$
When $\phi ij = 10$, then $yij = La + Ld/6$
When $\phi ij = 11$, then $yij = La + Ld/2$

Next, description will be given below of the operation of the decoding circuit 5. In Fig. 7, encoded data in 1 block are divided by the signal distribution circuit 14 into La, Ld, and $\phi 11$ to $\phi 44$, the three kinds of signals are respectively distributed to the reference level buffer 15, level interval buffer 16, and level specification signal buffer 17, the decoded pixel data yij is computed by the decoding operation circuit 18, the decoded pixel data yij is written into the buffer memory 19 every block, and the decoded pixel data yij is outputted every 4 lines.

In the conventional GBTC type encoding/decoding method employing a fixed code length, there are produced fractions in an operation to find the respective parameters P1, P2, La, Ld, L1 and L2 for use in encoding and in an operation to find the decoded pixel data yij for use in decoding. For this reason, when the conventional method is used to repeat encoding and decoding processings on the same image data, the encoded data and decoded data continue to vary each time the processings are performed, with the result that, when the data are reproduced as an image, the quality thereof continues to deteriorate.

SUMMARY OF THE INVENTION

The present invention aims at eliminating the above problems found in the conventional GBTC type encoding/decoding method. Accordingly, it is an object of the invention to provide a GBTC type encoding/decoding method employing a fixed code length which can restrict the deterioration of the quality of the reproduced image from an original image to a small range even if encoding and decoding processings are performed repeatedly.

The image encoding/decoding method of the invention is an encoding method of a fixed length GBTC type, in which fractions to be produced in an operation to encode or decode an image are rounded to the nearest whole number or cut away to thereby arrange all parameters and signals into integral numbers.

According to the image encoding/decoding method of the invention, due to the fact that fractions to be produced in the encoding and decoding operations are rounded to the nearest whole number or cut away to thereby arrange the respective parameters and the level specification signals of the respective pixels in each of the blocks into integral numbers, when encoding and decoding processings are performed repeatedly on the same image data, encoded data and decoded data are converged at the third encoding or decoding processing at the latest, respectively.

## BRIEF DESCRIPTION OF THE DRAWINGS

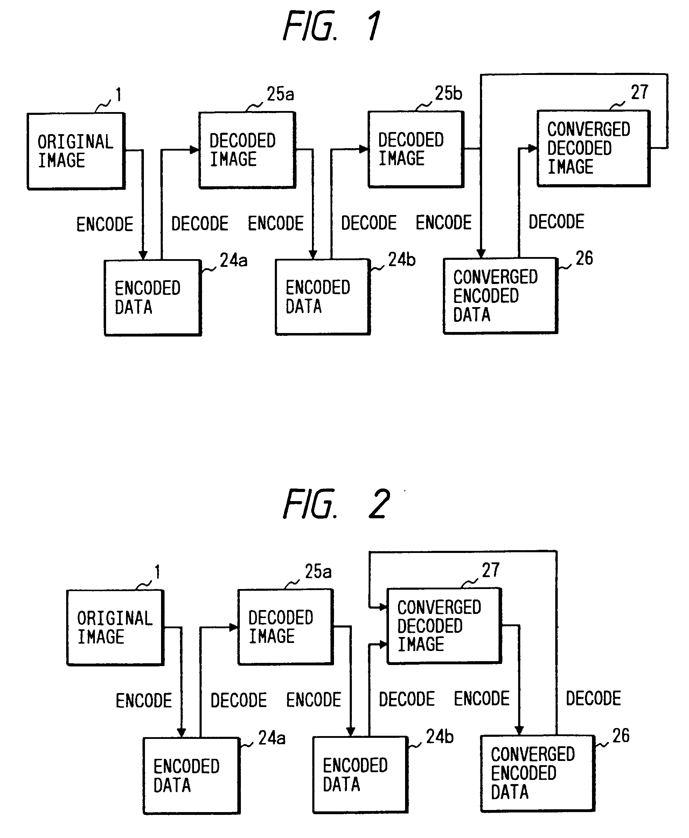

Fig. 1 is an explanatory view of a case in which the coded data reaches its converged condition at the third encoding processing in an encoding/decoding method according to the embodiment 1 of the invention;

Fig. 2 is an explanatory view of a case in which the decoded data reaches its converged condition at the second decoding processing in an encoding/decoding method according to the embodiment 1 of the invention;

Fig. 3 is an explanatory view of an conventional encoding method of a fixed length GBTC type;

Fig. 4 is a block diagram of an encoding/decoding circuit using the conventional encoding method of a fixed length GBTC type;

Fig. 5 is a block diagram of an encoding circuit using an encoding method of a fixed length GBTC type;

Fig. 6 is an explanatory view of the arrangement of the respective parameters and level specification signals as well as the code system in reading according to the encoding method of a fixed length GBTC type;

Fig. 7 is a block diagram of a decoding circuit using an encoding method of a fixed length GBTC type; and,

Fig. 8 is an explanatory view of a decoding method of a fixed length GBTC type.

## DETAILED DESCRIPTION OF PREFERRED EMBODIMENTS

Embodiment 1

In Tables 3 and 4, there is shown an algorithm employed in the GBTC type encoding/decoding method of the invention.

[TABLE 3]

| GBTC type encoding algorithm in Embodiment |
|---|
| P1 = (Lmax + 3Lmin)/4    (fractions to be rounded to the nearest whole number or cut away)<br><br>P2 = (3Lmax + Lmin)/4    (fractions to be rounded to the nearest whole number or cut away)<br><br>Q1 = mean value of all Xij (Xij ≤ P1)<br>                (fractions to be rounded to the nearest whole number or cut away)<br><br>Q4 = mean value of all Xij (Xij ≥ P2)<br>                (fractions to be rounded to the nearest whole number or cut away)<br><br>La = (Q1 + Q4)/2    (fractions to be rounded to the nearest whole number or cut away)<br><br>Ld = Q4 - Q1<br>L1 = La - Ld/4    (fractions to be rounded to the nearest whole number or cut away)<br><br>L2 = La + Ld/4    (fractions to be rounded to the nearest whole number or cut away)<br><br>for (i = 1, 2, 3, 4)<br>  for (i = 1, 2, 3, 4)<br>    if Xij ≤ L1        φij = 01 (binary)<br>    else if Xij ≤ La   φij = 00 (binary)<br>    else if Xij ≤ L2   φij = 10 (binary)<br>    else               φij = 11 (binary)<br>    end if<br>  end for<br>end for |

[TABLE 4]

```
                    GBTC type decoding algorithm

for (i = 1, 2, 3, 4)
  for (i = 1, 2, 3, 4)
    if φij = 01             Yij = La - Ld/2
                            (fractions to be rounded to the
                            nearest whole number or cut away)
      else if φij = 00      Yij = La - Ld/6
                            (fractions to be rounded to the
                            nearest whole number or cut away)
      else if φij = 10      Yij = La + Ld/6
                            (fractions to be rounded to the
                            nearest whole number or cut away)
      else                        Yij = La + Ld/2
                            (fractions to be rounded to the
                            nearest whole number or cut away)
      end if
    end for
  end for
```

The algorithm of the present encoding/decoding method is different from the algorithm of the conventional encoding method shown in Tables 1 and 2 in that Q4 is the mean value of pixel values which range from Lmax down to P2 and also that, when there are produced fractions in the operation values used to find the parameters P1, P2, Q1, Q4, La and yij, the fractions are rounded to the nearest whole number or cur away to thereby arrange the respective values into integral numbers respectively. Such integral number arrangement processings are performed by means of the encoding circuit and decoding circuit.

In Fig. 1, there is shown an example in which, when the encoding and decoding processings are repeatedly performed on the same image data in the encoding method according to the embodiment 1, the image data reaches a converged condition. In Fig. 1, reference characters 24a and 24b designate encoded data; 25a and 25b, decoded image; 26, converged encoded data; and 27, a converged decoded image, respectively. In this case, at first the encoded data 26 is converged and then the decoded image 27 is also converged. After once converged, even if encoding and decoding processings are performed again on the same image data repeatedly, no further quality deterioration will occur at all. For this reason, after converged, the present encoding/decoding method is substantially equivalent to a reversible encoding/decoding method.

In Fig. 2, there is shown an example in which the image data reaches its converged condition at the second decoding processing. In this case, at first the decoded image 27 is converged and then the encoded data is also converged.

In the above-mentioned embodiment, each of the blocks is considered as a square having 4x4 pixels. However, the shape and number of pixels of each block are not limited to this. In this case, the buffer memory 7 for storing the data before encoded and the buffer memory 19 for storing the data after encoded may be respectively constructed such that they have the number of lines that matches the size of the block.

Also, although in the embodiments, the amount of data of 1 pixel is 8 bits, the data amount may be different. Further, the reference level La and level interval Ld are respectively allocated 1 byte and level specification signals φ11 to φ44 are respectively allocated 2 bits. However, other different arrangements may be employed for fixing the length of the codes.

To the memory 6 in the encoding/decoding device shown in Fig. 4, there can be applied a secondary storage medium such as a semiconductor memory, a magnetic disk or the like. Also, as a system which uses the present encoding method, there is available an image data base or the like.

In Fig. 4, the encoding circuit 4 and decoding circuit 5 are disposed externally of the memory 6. However, they can be incorporated integrally in the memory 6. Also, both of the encoding circuit 4 and decoding circuit 5 may be incorporated in the host device 3.

As has been described heretofore, according to the invention, there is provided an image encoding/decoding method in which the data length is fixed with respect to the reference level signal, level interval signal and level specification signal and, as the whole of the codes, every block has a fixed length. In the present image encoding/decoding method, due to the fact that the fractions of the operation values of the respective parameters for use in encoding as well as the fractions of the level specification signals values of the respective pixels in the blocks calculated in decoding are rounded to the nearest whole number or cut away, when encoding and decoding processings are performed repeatedly on the same image data, the encoded data and decoded data are respectively converged at the third encoding or decoding processing at latest. Thanks to this, even if the encoding and decoding processings are performed repeatedly, the quality of the reproduced image can be restricted to a small range of deterioration when compared with the quality of the original image.

## Claims

1. An image encoding/decoding method comprising the steps of:

dividing an original image into a plurality of blocks and setting representative gradation levels respectively representing the gradation levels of the respective pixels in each of said blocks;
calculating reference levels for the respective blocks from the representative gradation levels of the respective pixels;
setting level intervals obtained by classifying the distribution range of the representative gradation levels of the respective pixels in each of said blocks into a given number;
creating level specification signals respectively indicating to which one of said set classes each of said representative gradation levels of said respective blocks belongs;
encoding said reference level signals, level interval signals and level specification signals into data of a fixed length independently of one another; and
calculating decoded pixel data from said reference level signals, level interval signals and level specification signals to decode said encoded data, characterized in that
when said reference levels and level intervals are calculated and when said decoded pixel data are calculated, there is performed an operation to round fractions to the nearest whole number to thereby arrange the calculated values as integral numbers.

2. An image encoding/decoding method as claimed in claim 1, wherein said operation to round fractions is one of a cut-off operation and a half-adjust operation.

## Patentansprüche

1. Ein Verfahren zum Codieren/Decodieren von Bildern, das die folgenden Schritte aufweist:

Aufteilen eines Originalbildes in eine Vielzahl von Blöcken und Einstellen von repräsentativen Gradationsniveaus, die jeweils die Gradationsniveaus der jeweiligen Pixel in jedem der Blöcke repräsentieren;

Berechnen von Referenzniveaus für die jeweiligen Blöcke aus den repräsentativen Gradationsniveaus der jeweiligen Pixel;

Einstellen von Niveauintervallen, erhalten durch Klassifizierung des Verteilungsbereiches der repräsentativen Gradationsniveaus der jeweiligen Pixel in jedem der Blöcke, in eine gegebene Zahl;

Erzeugen von Niveauspezifizierungssignalen, die jeweils anzeigen, zu welcher Klasse von den eingestellten Klassen jedes der repräsentativen Gradationsniveaus der jeweiligen Blöcke gehört;

Codieren der Referenzniveausignale, Niveauintervallsignale und Niveauspezifizierungssignale in Daten einer festen Länge, unabhängig voneinander; und

Berechnen decodierter Pixeldaten aus den Referenzniveausignalen, Niveauintervallsignalen und Niveauspezifizierungssignalen, um die codierten Daten zu decodieren,

dadurch gekennzeichnet, daß,

wenn die Referenzniveaus und Niveauintervalle berechnet werden, und wenn die decodierten Pixeldaten berechnet werden, eine Operation durchgeführt wird, um Bruchteile zur nächsten ganzen Zahl zu runden, um dadurch die berechneten Werte als ganze Zahlen anzuordnen.

**2.** Ein Verfahren zum Codieren/Decodieren von Bildern wie in Anspruch 1 beansprucht, dadurch gekennzeichnet, daß die Operation, um Bruchteile zu runden, eine Abschneide-Operation oder eine ½-Runden-Operation ist.

**Revendications**

**1.** Procédé de codage/décodage d'images comprenant les étapes de :

diviser une image d'origine en un certain nombre de blocs et établir des niveaux d'échelonnement représentatifs représentant respectivement les niveaux d'échelonnement des éléments d'image respectifs dans chacun desdits blocs;
calculer les niveaux de référence pour les blocs respectifs à partir des niveaux d'échelonnement représentatifs des éléments d'image respectifs;
établir des intervalles de niveau obtenus en classant la gamme de distribution des niveaux d'échelonnement représentatifs des éléments d'image respectifs dans chacun des blocs en un nombre donné;
créer des signaux de spécification de niveau indiquant respectivement à laquelle desdites classes établies chacun desdits niveaux d'échelonnement représentatifs desdits blocs respectifs appartient;
coder lesdits signaux de niveau de référence, signaux d'intervalle de niveau et signaux de spécification de niveau en données d'une longueur fixe indépendamment les uns des autres; et
calculer les données d'éléments d'image décodées à partir desdits signaux de niveau de référence, signaux d'intervalle de niveau et signaux de spécification de niveau pour décoder lesdites données codées, caractérisé en ce que
lorsque lesdits niveaux de référence et lesdits intervalles de niveau sont calculés et lorsque lesdites données d'éléments d'image décodées sont calculées, on accomplit une opération pour arrondir des fractions au nombre entier le plus proche pour agencer de la sorte les valeurs calculées en nombres entier.

**2.** Procédé de codage/décodage d'images comme revendiqué en revendication 1, où l'opération précitée d'arrondir des fractions est une opération de soustraction ou une opération de réglage-moitié.

## FIG. 1

```
       1                    25a                   25b                        27
┌─────────────┐      ┌─────────────┐      ┌─────────────┐           ┌─────────────┐
│  ORIGINAL   │      │  DECODED    │      │  DECODED    │           │ CONVERGED   │
│  IMAGE      │      │  IMAGE      │      │  IMAGE      │           │ DECODED     │
│             │      │             │      │             │           │ IMAGE       │
└─────────────┘      └─────────────┘      └─────────────┘           └─────────────┘

  ENCODE    DECODE    ENCODE    DECODE    ENCODE        DECODE

        ┌─────────────┐      ┌─────────────┐      ┌─────────────┐
        │  ENCODED    │      │  ENCODED    │      │ CONVERGED   │
        │  DATA       │      │  DATA       │      │ ENCODED     │
        │             │      │             │      │ DATA        │
        └─────────────┘      └─────────────┘      └─────────────┘
             24a                  24b                   26
```

## FIG. 2

```
       1                    25a                              27
┌─────────────┐      ┌─────────────┐           ┌─────────────┐
│  ORIGINAL   │      │  DECODED    │           │ CONVERGED   │
│  IMAGE      │      │  IMAGE      │           │ DECODED     │
│             │      │             │           │ IMAGE       │
└─────────────┘      └─────────────┘           └─────────────┘

  ENCODE    DECODE    ENCODE        DECODE    ENCODE        DECODE

        ┌─────────────┐      ┌─────────────┐      ┌─────────────┐
        │  ENCODED    │      │  ENCODED    │      │ CONVERGED   │
        │  DATA       │      │  DATA       │      │ ENCODED     │
        │             │      │             │      │ DATA        │
        └─────────────┘      └─────────────┘      └─────────────┘
             24a                  24b                   26
```

# FIG. 3

4×4 PIXELS/BLOCK

ORIGINAL IMAGE

IMAGE DATA IN BLOCK

# FIG. 4

HOST DEVICE

ENCODING CIRCUIT

DECODING CIRCUIT

IMAGE DATA MEMORY

## *FIG. 5*

ENCODING CIRCUIT

IMAGE DATA → BUFFER MEMORY (7) → X11 ~ X44 → ENCODING OPERA- TION CIRCUIT (8)

→ La → REF LEVEL BUFFER (9) 1 BYTE

→ Ld → LEVEL INTERVAL BUFFER (10) 1 BYTE

→ φ11 ~ φ44 → LEVEL SPECIFI- CATION BUFFER (11) 4 BYTE

SIGNAL CONTROL CIRCUIT (12)

→ ENCODED DATA → MEMORY (6)

4

## *FIG. 6*

(1 BYTE)

| La |
| --- |

| Ld |
| --- |

| φ11 | φ12 | φ13 | φ14 |
| --- | --- | --- | --- |
| φ21 | φ22 | φ23 | φ24 |
| φ31 | φ32 | φ33 | φ34 |
| φ41 | φ42 | φ43 | φ44 |

(2 BITS)

| La | Ld | φ11~φ44 |
| --- | --- | --- |

1 BLOCK
(6 BYTES)

# FIG. 7

# FIG. 8